# EUROPÄISCHE PATENTSCHRIFT

(11) **EP 3 563 990 B1**
(45) Veröffentlichungstag und Bekanntmachung des Hinweises auf die Patenterteilung: **02.06.2021**
(21) Anmeldenummer: 19000204.8
(22) Anmeldetag: 29.04.2019
(51) Int. Cl.: B25J 15/02

(54) **GREIFVORRICHTUNG MIT OPTIMIERTEM DOPPELSCHIEBEKEILGLIED II**
GRIPPING DEVICE WITH OPTIMIZED DOUBLE PUSH WEDGE MEMBER II
DISPOSITIF DE PRÉHENSION À ÉLÉMENT CUNÉIFORME COULISSANT DOUBLE II OPTIMISÉ

(30) Priorität: 30.04.2018 DE 102018003486
(43) Veröffentlichungstag der Anmeldung: 06.11.2019
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1-102015 218 127
- DE-U1-202005 009 480
- C. Mattheck ET AL: "Die Methode der Zugdreiecke im Vergleich mit anderen Kerbformen", , 1. Januar 2008 (2008-01-01), Seiten 1-1, XP055056023, Gefunden im Internet: URL:http://bibliothek.fzk.de/zb/berichte/M attheck-Poster-081029.pdf [gefunden am 2013-03-11]

## Beschreibung

Die Erfindung betrifft eine Greifvorrichtung mit bewegliche Greifelemente tragenden Schlitten, wobei die Schlitten in Greifrichtung der Greifelemente hintereinander in einer in einem Grundkörper angeordneten, zu den Greifelementen hin zumindest bereichsweise offenen Führungsnut parallel zur Greifrichtung - zwischen einer Öffnungs- und Schließstellung - über ein Stellglied antreibbar geführt und quer zur Greifrichtung allseitig abstützend gelagert sind.

Aus der DE 10 2015 004 404 B4 ist eine Präzisionsgreifvorrichtung bekannt, bei der in einem Gehäuse Greifelemente tragende Schlitten über ein Doppelschiebekeilglied angelenkt werden. Das Doppelschiebekeilglied wird durch ein pneumatisches Stellglied angetrieben.

Die DE 10 2015 218 127 A1 beschreibt eine Greif- oder Spannvorrichtung, in der eine Zylinder-Kolben-Einheit über ein Doppelschiebekeilgetriebe die Greifarme tragenden Schlitten der Vorrichtung aufeinander zu- oder voneinander wegbewegt. Das Doppelschiebekeilglied wird zur Reduzierung der Flächenpressung zwischen ihm und den Schlitten konstruktiv durch eine Kontaktflächenvergrößerung verändert.

Die DE 20 2005 009480 U1 beschreibt einen Lineargreifer mit Doppelschiebekeilglied mit T-Nutsteinen mit Nutsteinausrundungen, offenbaren jedoch keine Hinweise auf die Dimensionierung des Radius der Ausrundungen in Abhängigkeit von Stegbreite und Kulissentiefe der T-Nutsteine.

Der vorliegenden Erfindung liegt die Problemstellung zugrunde, eine Greifvorrichtung zu entwickeln, die bei großer Greifkraft und geringem Bauraumbedarf eine große Lastwechsel- bzw. Schwingspielzahl aufweist.

Diese Problemstellung wird mit den Merkmalen des Patentanspruchs 1 gelöst. Zwischen den Schlitten ist ein kuppelndes Doppelschiebekeilglied angeordnet, das senkrecht zur Greifrichtung verfahrbar an einem beweglichen Teil des Stellglieds angelenkt ist. Die Schlitten weisen in den einander zugewandten Stirnflächen jeweils eine T-Nut auf, in die jeweils ein vom Doppelschiebekeilglied abstehender T-Nutstein eingreift. Die T-Nutsteine sind an einem zentralen Basiskörper des Doppelschiebekeilglieds jeweils über einen Nutsteinhaltesteg angeformt oder angeordnet. Die Führungslängsrichtungen der T-Nuten schließen einen Winkel von 45 bis 122 Winkelgraden ein. Alle Außenkerben der T-Nutsteine und die Übergangsstellen sind zwischen den T-Nutsteinen und dem Basiskörper - zur Minderung der Kerbspannungen des Doppelschiebekeilglieds - ausgerundet. Die Außenkerben und die Übergangsstellen des Doppelschiebekeilglieds haben jeweils eine gekrümmte Kreisbogenkontur, deren Radius einen Wert hat, der zum einen zwischen der halben Stegbreite und einem Siebtel der Stegbreite des Nutsteinhaltestegs und zum anderen zwischen einem Drittel und einem Siebtel der Kulissentiefe des T-Nutsteins liegt.

Die Greifelemente tragenden Schlitten werden im Ausführungsbeispiel mithilfe einer druckluftbetriebenen Zylinder-Kolben-Einheit als Stellglied in ihrer Führungsnut bewegt. Die Kolbenstange der Zylinder-Kolben-Einheit wirkt hierbei direkt auf ein Doppelschiebekeilglied, das Teil eines Doppelschiebekeil- bzw. Doppelkeilhakengetriebes ist. Innerhalb des Getriebes wird die Hubbewegung der Kolbenstange in eine z.B. um 90 Winkelgrade gekippte Greif- oder Lösebewegung umgelenkt. Für den Fall, dass der Keilwinkel des Doppelschiebekeilgetriebes ungleich 45 Winkelgrade ist, findet neben der Richtungsumlenkung auch eine Über- oder Untersetzung statt. Hierbei ist das Doppelschiebekeilglied einer großen Biegelast ausgesetzt. Da die Greifvorrichtungen zudem sowohl als Außengreifer als auch als Innengreifer eingesetzt werden, ändert die Biegelast häufig auch bei einem Chargenwechsel ihr Vorzeichen. Um nun möglichst vielen Greifzyklen ohne Ermüdungsbruch standzuhalten, wird das Doppelschiebekeilglied besonders an Stellen mit großen Querschnittsänderungen und Steifigkeitssprüngen mit speziellen Übergänge versehen, die eine positive Auswirkung auf die Dauerfestigkeit haben. Diese Übergänge sind insbesondere Ausrundungen von Kerben. Zugleich wird versucht, große Materialanhäufungen zu vermeiden, um die Steifigkeitssprünge so klein wie möglich zu halten. Das wirkt sich zudem positiv auf die Dynamik des Stellglieds aus.

Die Oberflächen der einzelnen Außenkerben und der einzelnen Übergangsstellen lassen sich mittels einer Oberflächenbearbeitung nachverdichten.

Die T-Nutsteine des Doppelschiebekeilglieds lassen sich in mindestens einer Hubendlage aus den T-Nuten der Schlitten um mehr als 25 Prozent ihrer Höhe herausfahren. Zudem fahren die T-Nutsteine in der Hubendlage aus den T-Nuten heraus, in der die Schlitten zueinander den geringsten Abstand haben.

Als Stellglieder können auch elektromechanische, elektromagnetische, piezoelektrische und auf Formgedächtniselementen basierende Antriebe verwendet werden.

Im Ausführungsbeispiel werden nur Teile von Parallelgreifern gezeigt. Selbstverständlich können die meisten Teile mit Ausnahme des Gehäuses auch für Drei-, Vier- und Mehrbacken-, Mehrschlitten- oder Zentrischgreifer verwendet werden, sodass die dargestellte Problemlösung auch dort eingesetzt werden kann. Bei Drei-, Vier- oder Mehrbackengreifern werden in den beispielsweise sternförmig oder parallel angeordneten Führungsnuten pro Nut in der Regel zwei Schlittenführungsschienen vorgesehen. Es ist aber auch möglich, pro Führungsnut nur eine, drei oder mehrere einzelne Schlittenführungsschienen einzubauen.

Weitere Einzelheiten der Erfindung ergeben sich aus den Unteransprüchen und der nachfolgenden Beschreibung schematisch dargestellter Ausführungsformen.
- Figur 1:: perspektivische Ansicht eines Parallelgreifers;
- Figur 2:: perspektivische Ansicht eines Doppelschiebekeilglieds;
- Figur 3:: Längsschnitt durch den Parallelgreifer nach Figur 1, jedoch mit Greifbacken; der rechte Greifbacken ist geöffnet;
- Figur 4:: mittiger Querschnitt durch den Parallelgreifer;
- Figur 5:: perspektivische Ansicht eines Schlittens von schräg oben;
- Figur 6:: perspektivische Ansicht eines Schlittens von schräg unten;
- Figur 7:: Seitenansicht des Doppelschiebekeilglieds;
- Figur 8:: Draufsicht auf das Doppelschiebekeilglied;
- Figur 9:: Seitenansicht des Doppelschiebekeilglieds;
- Figur 10:: Unteransicht des Doppelschiebekeilglieds;
- Figur 11:: Ansicht von schräg unten auf das Doppelschiebekeilglied;
- Figur 12:: Schrägschnitt durch einen Teil des Doppelschiebekeilglieds mit Außenkerbe am Nutsteinhaltesteg;
- Figur 13:: Schrägschnitt durch einen Teil des Doppelschiebekeilglieds mit Außenkerbe am T-Nutstein;
- Figur 14:: perspektivische Ansicht eines Doppelschiebekeilglieds mit Ausrundungen an den Nutsteinstegen.

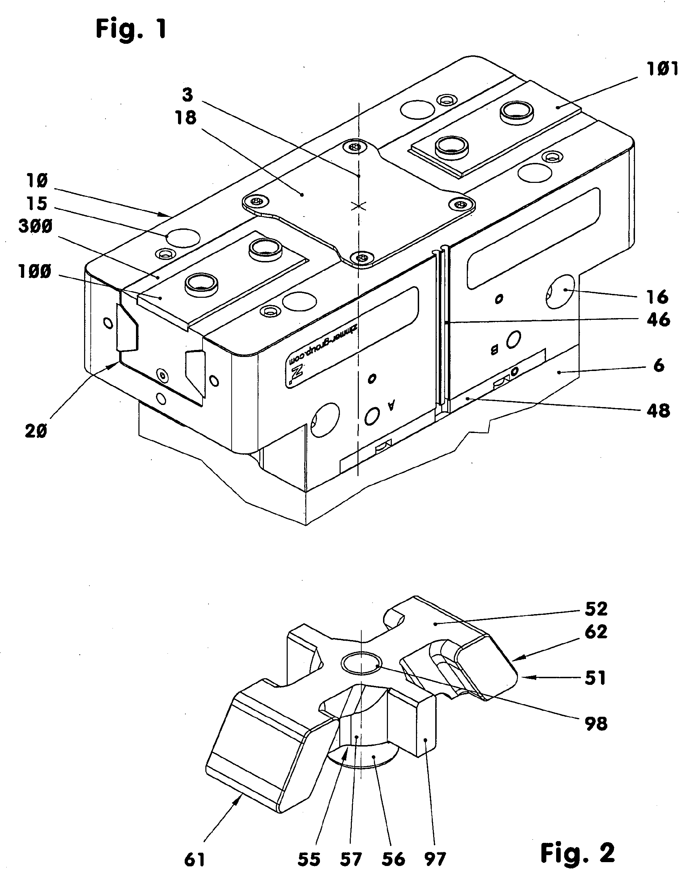

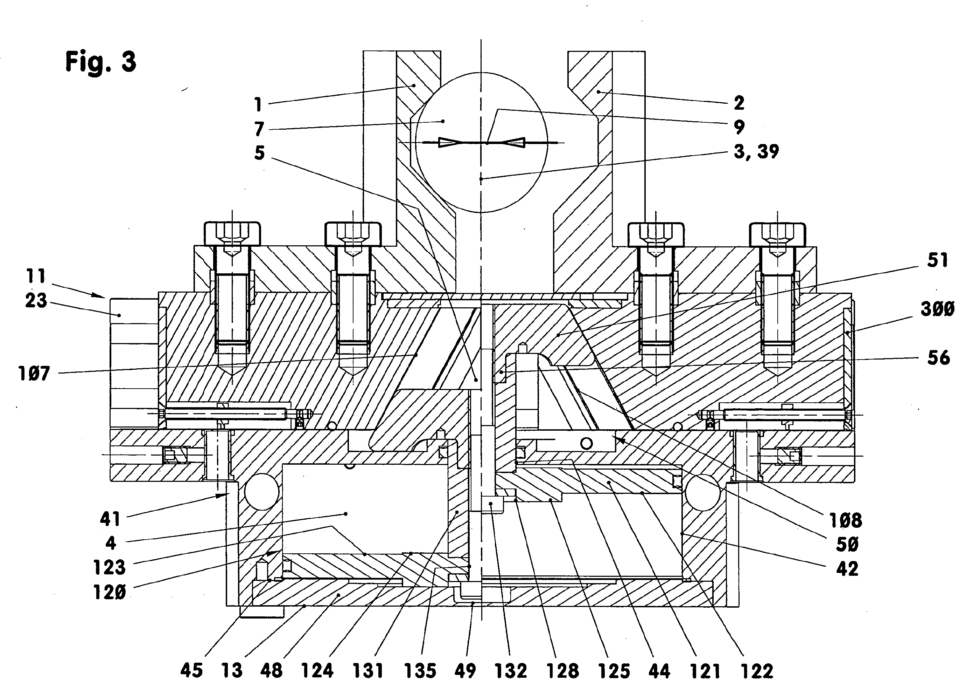

Die Figur 1 zeigt eine Parallelgreifvorrichtung mit zwei Schlitten (100, 101). Die in ihrer Längsrichtung beweglichen Schlitten (100, 101) sind in einem Gehäuse bzw. Grundkörper (10) in einer gemeinsam genutzten Führungsnut (20) z.B. gleitgelagert geführt. Das die Führungsnut aufnehmende Gehäuse (10) umgibt ferner eine z.B. doppeltwirkende Zylinder-Kolben-Einheit (120), vgl. Figur 3. Die Zylinder-Kolben-Einheit wirkt über ein Doppelschiebekeilgetriebe (50) auf die Schlitten (100, 101).

Die Figur 3 stellt die Parallelgreifvorrichtung im Längsschnitt mit zwei auf den Schlitten (100, 101) aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur fiktiven Darstellung nach Figur 3 bewegen sich die Greifbacken (1, 2) getriebebedingt zwangsläufig immer synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (41). Er ist beispielsweise aus der Aluminiumlegierung AlMgSil gefertigt. Im Ausführungsbeispiel hat der Grundkörper (10) die Abmessungen von 270 mm * 115 mm * 111 mm. Bei dieser beispielhaften Baugröße beträgt der maximale Hub jedes Schlittens (100, 101) bzw. Greifbackens (1, 2) 16,7 mm.

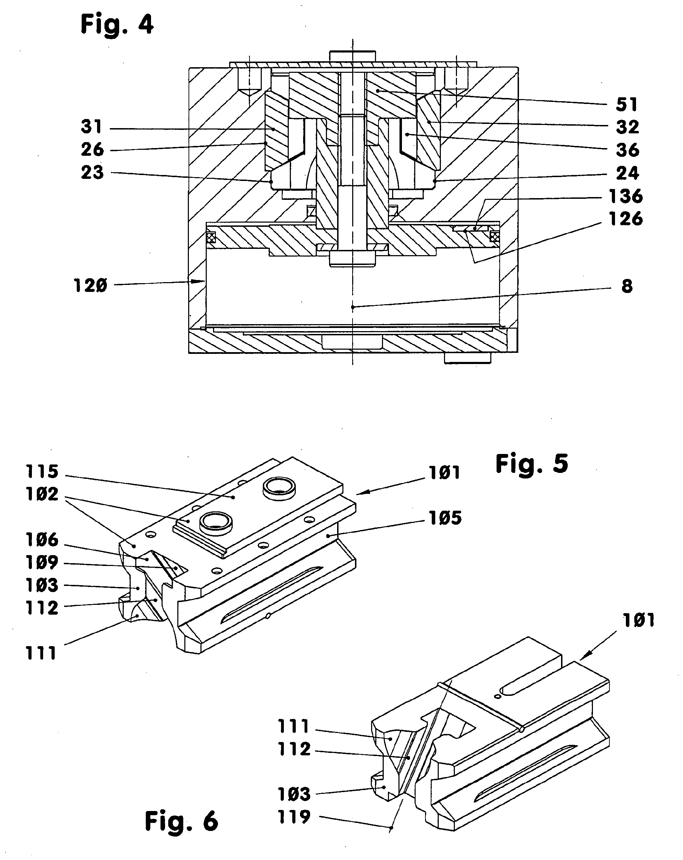

Der Führungsabschnitt (11) nimmt zentral die nach oben - zu den Greifelementen (1, 2) hin - offene Führungsnut (20) auf, vgl. Figuren 1 und 4, deren z.B. rechteckiger Querschnitt eine Breite von z.B. 57 mm und Höhe von z.B. 44,6 mm misst. In den planen Seitenwandungen (23, 24) der Führungsnut (20) ist jeweils eine flache, z.B. 2 mm tiefe und 29 mm breite Schienenführungsnut (26) zur Aufnahme einer Führungsschiene (31, 32) eingearbeitet. Die einzelne Schienenführungsnut (26) hat einen rechteckigen Querschnitt, einen planen Nutgrund und z.B. plane Seitenwandungen. Die Schienenführungsnuten (26) erstrecken sich hier über die gesamte Länge des Grundkörpers (10). Mittig zwischen den planen Seitenwandungen (23, 24) der Führungsnut (20) liegt die vertikale Mittenlängsebene (8), vgl. Figur 4.

Jede Führungsschiene (31, 32) ist hier eine aus einem nichtrostenden Stahl, z.B. aus einem X90CrMoV18 gefertigte, im Wesentlichen trapezförmige Stange. Die Breite der sich z.B. über die Länge des Grundkörpers (10) erstreckende Führungsschiene (31, 32) beträgt im Ausführungsbeispiel 29 mm. Die Höhe der Führungsschiene (31, 32) misst z.B. 13,85 mm. Aufgrund der hohen Festigkeit einer derartigen Führungsschiene (31, 32) können die Schlitten größere Momente auf den Grundkörper (10) übertragen. Demzufolge kann die Greifvorrichtung größere Greifkräfte auf das aufzunehmende Werkstück (7) ausüben.

Die einzelne Führungsschiene (31, 32) hat einen sechseckigen Querschnitt und weist zwei einander spiegelsymmetrisch gegenüberliegende Tragflanken auf, die einen Winkel von 30 bis 90 Winkelgraden einschließen. Mindestens eine der Führungsschienen (31, 32) weist mittig eine Quernut (36) mit der Breite von z.B. 5,7 mm und der Tiefe von z.B. 5,7 mm auf. Diese Quernut (36) dient u.a. der zusätzlichen verschleißfesten Führung des im Doppelschiebekeilgetriebe (50) verwendeten Doppelschiebekeilglieds (51). Im Ausführungsbeispiel hat jede Führungsschiene (31, 32) eine Quernut (36).

Ggf. können die einzelnen Führungsschienen (31, 32) auch aus zwei oder mehreren hintereinander angeordneten Abschnitten aufgebaut sein. Im Ausführungsbeispiel sind die Führungsschienen (31, 32) jeweils mit vier Senkschrauben am Grundkörper (10) befestigt.

Der unterhalb des Führungsabschnitts (11) gelegene Antriebsabschnitt (41) nimmt im Wesentlichen die Zylinder-Kolben-Einheit (120) und die Betätigungsmittel führenden Kanäle und Durchbrüche auf. In den seitlichen Bereichen unterhalb des Führungsabschnitts (11) ist der Grundkörper (10) beidseitig um ca. 17,2 % der Grundkörpergesamtlänge auf einer Höhe von ca. 42 % der Grundkörpergesamthöhe verkürzt ausgebildet.

Die Unterseite (13) des Grundkörpers (10) hat eine hier zwölfeckige Deckelausnehmung (45), vgl. Figuren 3 und 4. Die Deckelausnehmung erstreckt sich von der vorderen bis zur hinteren Längsseitenwandung des Grundkörpers (10). Von der Deckelausnehmung (45) aus ragt eine z.B. 40 mm tiefe Zylinderausnehmung (42) in den Grundkörper (10) in Richtung der Führungsnut (20) hinein. Die Zylinderausnehmung (42) hat hier einen ovalen Querschnitt.

Im Zentrum des Bodens der Zylinderausnehmung (42) befindet sich eine Durchgangsbohrung (44), die die Zylinderausnehmung (42) mit der Führungsnut (20) verbindet. Ca. mittig weist die Durchgangsbohrung (44) einen Einstich zur Aufnahme eines Kolbenstangendichtrings auf.

Zur Befestigung des Grundkörpers (10) an einem Maschinenschlitten (6) verfügt dieser über vier vertikale Bohrungen (15) und zwei Querdurchgangsbohrungen (16). In Figur 1 werden speziell die vertikalen Bohrungen (15) zur Befestigung benutzt.

Der Grundkörper (10) weist auf der in Figur 3 dargestellten großen Seitenwandung im mittleren Bereich zwei auch zu dieser Seitenwandung hin offene Sensorausnehmungen (46) auf. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (48), der mit geringem Spiel in die 12-eckige Deckelausnehmung (45) passt, vgl. Figuren 3 und 4, hat zentral eine dreistufige Vertiefung (49), in die der Kolben (121) inklusive der Kolbenstangenschraube (132) des pneumatischen Antriebs (120) in der Greiferschließstellung partiell hineinragen kann.

In dem von der Zylinderausnehmung (42) und dem Deckel (48) umgebenen Zylinderinnenraum (4) ist der ovale Kolben (121) mit seiner zweiteiligen Kolbenstange (131, 132) angeordnet. Der Kolben (121) hat zentral eine dreistufige Durchgangsbohrung (135), wobei die mittlere Stufe den kleinsten Durchmesser aufweist.

Die kolbenstangenseitige Bohrungsstufe hat zur Aufnahme einer Kolbenstangenhülse (131) einen Durchmesser von z.B. 25 mm. Um die Durchgangsbohrung (135) herum hat der Kolben (121) dort einen z.B. 0,4 mm hohen scheibenförmigen Vorsprung (124), der als oberer Anschlag des Kolbens (121) dient. Der Kolben (121) hat kolbenstangenseitig, nach dem Schnitt in Figur 4 auf der rechten Seite, eine Sacklochbohrung (126). In diese Sacklochbohrung ist ein Scheibenmagnet (136) für die Kolbenpositionsüberwachung eingeklebt.

Der ovale Kolben (121) besitzt zur Abdichtung gegenüber der Zylinderbodenwandung des Grundkörpers (10) einen umlaufenden, in einer Dichtnut gelagerten Quaddichtring. Die Kolbenbodenseite (122), vgl. Figur 4, weist ebenfalls einen Vorsprung (125) auf, in dessen zentraler Senkung (128) der Kopf der Kolbenstangenschraube (132) mit einer Unterlagscheibe sitzt.

Die Kolbenstange (131, 132) besteht hier aus der Kolbenstangenschraube (132), z.B. einer M10-Zylinderkopfschraube, und einer auf ihr aufgesteckten Kolbenstangenhülse (131). Diese beiden Teile bilden zusammen mit dem Kolben (121) und Doppelschiebekeilglied (51) des Doppelschiebekeilgetriebes (50) eine formsteife Baugruppe. Die Kolbenstangenschraube (132) ist auf den Rohrzapfen (56) des Doppelschiebekeilglieds (51) aufgesteckt und in der Gewindebohrung (98) verschraubt.

Das Doppelschiebekeilglied (51), das im mittleren Bereich der Führungsnut (20) als Teil eines Doppelschiebekeilgetriebes (50) angeordnet ist, ist im Wesentlichen ein balkenartiges Bauteil, das zur vertikalen Mittenlängsebene (8) und zur vertikalen Mittenquerebene (39) spiegelsymmetrisch aufgebaut ist.

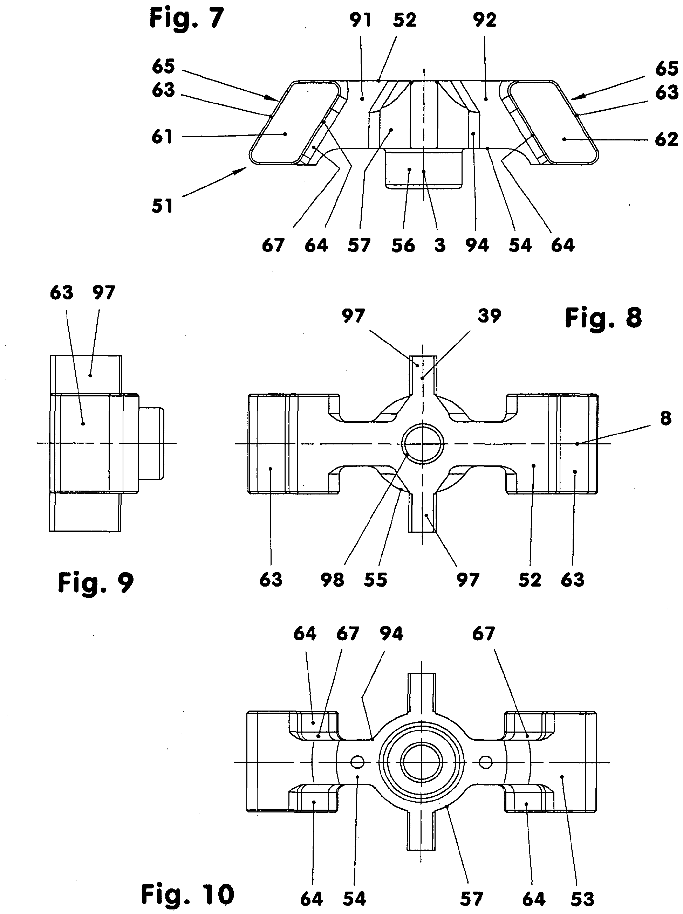

Das Doppelschiebekeilglied (51) besteht beim Parallelgreifer im Wesentlichen aus einem zentralen Basiskörper (55) zur Anbindung an einem Stellglied (120) und zwei angeformten T-Nutsteinen (61, 62), zur Anlenkung der beiden Schlitten (100, 101), vgl. Figuren 2, 7 bis 10. Der Basiskörper (55) hat eine Breite, die mit der Gesamtbreite der T-Nutsteine (61, 62) übereinstimmt. Vom ihm (55) stehen zwei Nutsteinhaltestege (91, 92), zwei Stützstege (97) und ein Rohrzapfen (56) ab.

Die beiden beidseitig vom Basiskörper (55) senkrecht abstehenden Stützstege (97) haben eine Breite von z.B. 6,5 mm. Ihre Länge erstreckt sich von der Oberseite (52) des Doppelschiebekeilglieds (51) bis zum Ansatz des Rohrzapfens (56). Über den Basiskörper (55) stehen sie seitlich z.B. 9,5 mm über.

Jeder am Basiskörper (55) angeformte Nutsteinhaltesteg (91, 92) - er hat eine Breite von z.B. 11 mm - trägt an seinem außenliegenden Ende einen T-Nutstein (61, 62). Letzterer steht beidseitig z.B. 7 mm über den jeweiligen Nutsteinhaltesteg (91, 92) über. Er hat im Wesentlichen einen Parallelogrammquerschnitt, dessen spitze Winkel z.B. 60,3 Winkelgrade einschließen.

Jeder T-Nutstein (61, 62) hat eine Außenflanke (63), die zugleich auch eine Stirnseite des Doppelschiebekeilglieds (51) darstellt. Der Außenflanke (63) liegen nutsteinstegseitig zwei Innenflanken (64) gegenüber, die beide in einer zur Außenflanke (63) parallelen Ebene liegen. Der Abstand zwischen der Außenflanke (63) und einer Innenflanke (64) misst z.B. 11,5 mm. Die Stirnseiten (65) des Doppelschiebekeilglieds (51) schließen mit der Mittellinie (3) z.B. einen Winkel von 29,7 Winkelgraden ein. Die Ausdehnung der T-Nutsteine (61, 62) beträgt in einer zur Mittellinie (3) parallelen Richtung z.B. 21 mm.

Die Unterseite des Basiskörpers (55) weist eine Unterseitenausnehmung (54) mit einer Tiefe von z.B. 4,1 mm auf. Sie erstreckt sich in der Schlittenverfahrrichtung (9) bis ca. 4 mm vor die T-Nutsteine (61, 62). Aus der Unterseitenausnehmung (54) steht der z.B. 10 mm lange Rohrzapfen (56) hervor. Er weist einen Außendurchmesser von z.B. 18 mm auf. Der Basiskörper (55) hat eine durchgehende Gewindebohrung (98), die auch den Rohrzapfen (56) durchdringt. Die Mittellinie der Gewindebohrung (98) ist deckungsgleich mit der Mittellinie (3). Auf den Rohrzapfen (56) ist die Kolbenstangenhülse (131) aufgesteckt. In der Gewindebohrung (98) ist die Kolbenstangenschraube (132) fixiert.

In der Regel wird die Geometrieform des Basiskörpers (55) zwischen den T-Nutsteinen (61, 62) durch die Form des Fräswerkzeuges vorgegeben, das die Innenflanken (64) freischneidet. Dieses Freischneiden gibt dem Basiskörper (55) die Gestalt eines Doppelkeils. Nach den Figuren 4, 5 und 7 erhält der Basiskörper (55) durch eine materialabtragende Nachbearbeitung hier bereichsweise eine zylindrische Außenwandung (57), aus der die Nutsteinhaltestege (91, 92) und die Stützstege (97) herausragen. Diese Außenwandung (57) hat dabei z.B. den gleichen Außendurchmesser wie die angebaute Rohrzapfen (56). Durch diese Nachbearbeitung wird die Masse des Doppelschiebekeilglieds (51) kleiner. Zugleich wird durch diese Maßnahme zwischen der Unterseitenausnehmung (54) und der den Zylinderraum des Stellglieds (120) abgrenzenden Wandung ein das Schmiermittel des Doppelschiebekeilgetriebes (50) verdrängender Spalt vermieden.

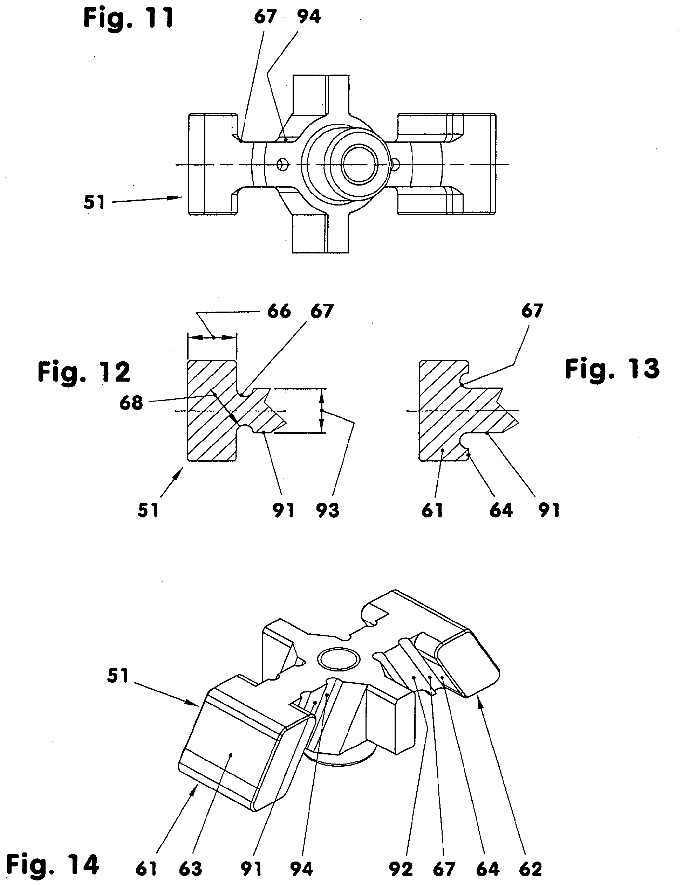

Der Übergang zwischen jeder Innenflanke (64) eines T-Nutsteins (61, 62) und dem Nutsteinhaltesteg (91, 92) befindet sich eine Nutsteinausrundung (67), die die Kerbspannungsbelastung der Übergangsstelle gegenüber üblichen Ausrundungen bzw. Außenkerben bei Doppelschiebekeilgliedern des Standes der technik um beispielweise 40 Prozent senkt. Im Ausführungsbeispiel, nach den Figuren 2 und 11, hat die Nutsteinausrundung (67) die Form eines Viertels einer Zylindermantelfläche, wobei die seitlichen Mantelflächenenden jeweils tangential in die Innenflanken und tangential in die Seitenwandungen des Nutsteinhaltestegs (91, 92) übergehen. Der Radius der Nutsteinausrundung beträgt z.B. 2 mm.

Auch der Übergang zwischen dem Basiskörper (55) und der Seitenwandung des Nutsteinhaltestegs (91, 92) ist als Stegausrundung (94) ausgebildet, deren Form der Nutsteinausrundung (67) entspricht. In den Ausführungsbeispielen sind nur beispielhaft die Radien der Nutsteinausrundungen (67) und der Stegausrundungen (94) gleich groß.

Alternativ zu den Figuren 2 und 11 sind in den Figuren 12 und 14 die Nutsteinausrundungen (67) und die Stegausrundungen (94) ausschließlich in den Nutsteinhaltesteg (91, 92) verlegt. Die Nutsteinausrundungen (67) gehen tangential in die Innenflanken des T-Nutsteins (61, 62) über. Dadurch ergibt sich - bei gleichen Außenabmessungen des Doppelschiebekeilglieds (51) - für die Innenflanken (64) eine größere Fläche und eine niedrigere Flächenpressung als bei der Variante nach Figur 11.

Eine andere Variante zeigt die Figur 13. Sie zeigt, wie die Figur 12, einen Teilschnitt des Doppelschiebekeilglieds (51), wobei die Schnittfläche normal zur Führungslängsrichtung (119) der Schlittenführungsnut (105) orientiert ist. Hier ist die Ausrundung (67) der Außenkerbe ausschließlich in dem Bereich der Innenflanken (64) des T-Nutsteins (61) angeordnet. Die Ausrundung (67) geht tangential in den Nutsteinhaltesteg (91) über. Dies gilt auch für die Ausrundungen (94), die zwischen dem Nutsteinhaltesteg (91, 92) und dem Basiskörper (55) platziert sind. Bei dieser Variante kann der Nutsteinhaltesteg (91, 92) im Vergleich zu den Varianten nach den Figuren 12 und 14 - bei gleicher Formsteifigkeit - schmäler ausgelegt werden.

Jeder T-Nutstein (61, 62) des Doppelschiebekeilglieds (51) greift formschlüssig in einen der in der Führungsnut (20) gelagerten Schlitten (100, 101) ein. Jeder der Schlitten ist primär ein quaderförmiger Körper, in den beidseitig Schlittenführungsnuten (105) eingearbeitet sind. Über die z.B. schrägen Wandungen der Nuten (105) ist der einzelne Schlitten (100, 101) auf den Führungsschienen (31, 32) gleitgelagert. Die Schlitten (100, 101) sind aus dem Einsatzstahl 16MnCr5 gefertigt. Ggf. wird als Werkstoff auch ein Vergütungsstahl oder ein rost- und säurebeständiger Stahl verwendet.

Der einzelne Schlitten (100, 101), dessen Breite z.B. 0,2 mm kleiner ist als die Breite der Führungsnut (20), hat in der dem Doppelschiebekeilglied (51) zugewandten Stirnfläche (103) eine schräg angeordnete T-Nut (106), mit der der Schlitten (100, 101) den T-Nutstein (61, 62) des Doppelschiebekeilglieds (51) mit einem unter 0,1 mm liegenden Spiel umgreift. Die Neigung der T-Nut (106) entspricht der jeweiligen Schrägstellung des darin geführten T-Nutsteins (61, 62) des Doppelschiebekeilglieds (51).

Nach den Figuren 5 und 6 weist die Stirnfläche (103) eine Ausnehmung (111) auf, die parallel und entlang der jeweiligen T-Nut (106) ausgebildet ist. Die Ausnehmung (111), deren Breite z.B. geringfügig größer oder gleich der Breite der T-Nut ist, lässt für die T-Nut (106) zwei Stege (112) stehen. Die Stege (112) haben dabei zumindest über nahezu den größten Teil der Steglänge, oder über die Steggesamtlänge, einen konstanten Querschnitt, sodass über den gesamten Verfahrweg des Doppelschiebekeilglieds (51) die Belastung der Stege nahezu konstant ist oder konstant bleibt, was der Verschleißminderung dient.

Selbstverständlich ist es auch möglich, die Nutsteinausrundungen (67) des Doppelschiebekeilglieds (51) in den T-Nuten (106) zwischen den seitlichen T-Nutwandungen und den innenliegenden Flanken der Stege (112), den Keilflächen (108), die jeweils dem Nutgrund - also den Keilflächen (107) - der T-Nuten (106) gegenüberliegen, einzuarbeiten.

Gemäß den Figuren 5 und 6 sind in den Grund der T-Nut (106) mit Schmiermittel befüllbare Schmiertaschen (109) eingearbeitet. Auf der dem Doppelschiebekeilglied (51) abgewandten Stirnfläche weist der einzelne Schlitten (100, 101) eine Gewindebohrung auf, vgl. Figur 1, deren Mittellinie auf der Mittenlängsebene (8) liegt. Über diese Gewindebohrung kann eine Führungsnutdichtung (300) mittels einer Senkschraube befestigt werden.

Auf der Oberseite jedes.Schlittens (100, 101) befindet sich ein quaderförmiger Adapteraufsatz (115), in dessen Oberseite (102) zwei mit Zylindersenkungen ausgestattete Gewindebohrungen angeordnet sind, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

Die Schlitten (100, 101) sind in der Führungsnut (20), vgl. Figur 3, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (20) ist mit einer Abdeckplatte (18) verschlossen. Die Abdeckplatte (18) ist im Bereich der Führungsnut (20) so breit ausgelegt, dass die beiden Schlitten (100, 101), in Schließstellung der Greifbacken (1, 2), diese gerade noch nicht berühren.

Für die Schließ- bzw. Greifbewegung wird der Kolben (121), vgl. Figur 2, der sich zusammen mit dem Doppelschiebekeilglied (51) in seiner oberen Endlage befindet, z.B. mit Druckluft aus dieser Position heraus nach unten bewegt. Dazu wird seine Kolbenstangenseite (123) mit Druckluft beaufschlagt. Das sich nach unten bewegende Doppelschiebekeilglied (51) zieht die Schlitten (100, 101) in der Führungsnut (20) nach innen zur Mitte hin. Die Kombination aus Kolben (121), Kolbenstange (131, 132) und Doppelschiebekeilglied (51) wird zusätzlich in den Quernuten (36) der Führungsschienen (31, 32) geführt. Bei der Schließbewegung kommen die Keilflächen (108) an den Innenflanken (64) des Doppelschiebekeilglieds (51) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstücks (7) wird die Kolbenbodenseite mit Druckluft beaufschlagt. Der sich nach oben bewegende Verbund aus dem Kolben (121) und dem Doppelschiebekeilglied (51) drückt die Schlitten (100, 101) bzw. die Greifbacken (1, 2) solange auseinander, bis die Kolbenstangenseite (123) am Grund der Zylinderausnehmung (42) zur Anlage kommt. Hier kontaktieren die Keilflächen (107) bei der Lösebewegung die Außenflanken (63) des Doppelschiebekeilglieds (51).

Zur Erhöhung der Klemm- und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

Kombinationen der in den Figuren 1 bis 14 gezeigten Ausführungsbeispiele sind denkbar.

### Bezugszeichenliste:

- 1, 2: Greifelemente, Greifbacken
- 3: Mittellinie zu (10, 50, 120)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 8: Mittenlängsebene, vertikal
- 9: Greifrichtung, Schlittenverfahrrichtung

- 10: Grundkörper, Gehäuse
- 11: Führungsabschnitt
- 13: Grundkörperunterseite
- 15: Befestigungsbohrungen, vertikal
- 16: Quergangsbohrungen
- 18: Gehäuseabdeckung, Abdeckplatte

- 20: Führungsnut
- 23, 24: Seitenwandungen, Führungsnutwandungen

- 26: Schienenführungsnut

- 31, 32: Führungsschiene, Schlittenführungsschiene
- 36: Quernut
- 39: Mittenquerebene, vertikal
- 41: Antriebsabschnitt
- 42: Zylinderausnehmung, oval

- 44: Durchgangsbohrung, mittig
- 45: Deckelausnehmung
- 46: Sensorausnehmungen

- 48: Deckel
- 49: Vertiefung

- 50: Doppelschiebekeilgetriebe
- 51: Doppelschiebekeilglied, Doppelschiebekeil, Getriebebauteil
- 52: Oberseite
- 53: Unterseite
- 54: Unterseitenausnehmung
- 55: Basiskörper
- 56: Rohrzapfen
- 57: Außenwandung, zylindrisch

- 61, 62: T-Nutsteine
- 63: Außenflanken; Stirnseiten, außen
- 64: Innenflanken

- 65: Stirnseiten, Stirnflächen, schräg
- 66: Kulissentiefe
- 67: Nutsteinausrundungen, Ausrundungen, Außenkerben
- 68: Radius

- 91, 92: Nutsteinhaltestege
- 93: Stegbreite
- 94: Stegausrundungen, Ausrundungen, Übergangsstellen, Außenkerben
- 97: Stützstege
- 98: Gewindebohrung

- 100, 101: Schlitten
- 102: Oberseite
- 103: Stirnseite, Stirnfläche
- 105: Schlittenführungsnuten, Nuten
- 106: T-Nut
- 107: Keilflächen, Öffnungsanlage
- 108: Keilflächen, Schließanlage
- 109: Schmiertaschen

- 111: Ausnehmung an (103)
- 112: Stege für (106)
- 115: Adapteraufsatz
- 119: Führungslängsrichtung

- 120: Zylinder-Kolben-Einheit; Antrieb, pneumatisch; Stellglied
- 121: Kolben, oval
- 122: Kolbenbodenseite
- 123: Kolbenstangenseite
- 124: Vorsprung, scheibenförmig; Anschlag
- 125: Vorsprung, kolbenbodenseitig, zylindrisch
- 126: Sacklochbohrungen für (136)
- 128: Senkung

- 131: Kolbenstangenhülse, Kolbenstange
- 132: Kolbenstangenschraube, Kolbenstange
- 135: Durchgangsbohrung
- 136: Scheibenmagnete

- 300: Führungsnutdichtung

## Patentansprüche

1. Greifvorrichtung mit bewegliche Greifelemente (1, 2) tragenden Schlitten (100, 101), wobei die Schlitten (100, 101) in Greifrichtung (9) der Greifelemente (1, 2) hintereinander in einer in einem Grundkörper (10) angeordneten, zu den Greifelementen (1, 2) hin zumindest bereichsweise offenen Führungsnut (20) parallel zur Greifrichtung (9) - zwischen einer Öffnungs- und Schließstellung - über ein Stellglied (120) antreibbar geführt und quer zur Greifrichtung (9) allseitig abstützend gelagert sind,
- wobei zwischen den Schlitten (100, 101) ein diese kuppelndes Doppelschiebekeilglied (51) angeordnet ist, das senkrecht zur Greifrichtung (9) verfahrbar an einem beweglichen Teil des Stellglieds (120) angelenkt ist,
- wobei die Schlitten (100, 101) in den einander zugewandten Stirnflächen (103) jeweils eine T-Nut (106) aufweisen, in die jeweils ein vom Doppelschiebekeilglied (51) abstehender T-Nutstein (61, 62) eingreift,
- wobei die T-Nutsteine (61, 62) an einem zentralen Basiskörper (55) des Doppelschiebekeilglieds (51) jeweils über einen Nutsteinhaltesteg (91, 92) angeformt oder angeordnet sind,
- wobei die Führungslängsrichtungen (119) der T-Nuten (106) einen Winkel von 45 bis 122 Winkelgraden einschließen und
- wobei alle Außenkerben (67) der T-Nutsteine und die Übergangsstellen (94) zwischen den T-Nutsteinen (61, 62) und dem Basiskörper (55) - zur Minderung der Kerbspannungen des Doppelschiebekeilglieds (51) - ausgerundet sind,
- wobei die Außenkerben (67) und die Übergangsstellen (94) des Doppelschiebekeilglieds (51) jeweils eine gekrümmte Kreisbogenkontur haben, **gekennzeichnet dadurch, dass** deren Radius (68) einen Wert hat, der zum einen zwischen der halben Stegbreite (93) und einem Siebtel der Stegbreite des Nutsteinhaltestegs (91, 92) und zum anderen zwischen einem Drittel und einem Siebtel der Kulissentiefe (66) des T-Nutsteins (61, 62) liegt.

2. Greifvorrichtung gemäß Anspruch 1, **dadurch gekennzeichnet, dass** die Außenkerben (67) und die Übergangsstellen (94) des Doppelschiebekeilglieds (51) jeweils eine gekrümmte Kontur haben, die aus verschieden gekrümmten Bögen oder vergleichbaren Kurven zusammengesetzt sind.

3. Greifvorrichtung gemäß Anspruch 2, **dadurch gekennzeichnet, dass** die verschiedenen gekrümmten Bögen oder vergleichbaren Kurven der einzelnen Außenkerbe (67) und der einzelnen Übergangstelle (94) jeweils tangential ineinander übergehen.

4. Greifvorrichtung gemäß Anspruch 3, **dadurch gekennzeichnet, dass** die verschiedenen gekrümmten Bögen oder vergleichbaren Kurven der einzelnen Außenkerbe (67) und der einzelnen Übergangsstelle (94) als Gesamtkrümmung von der Krümmung eines Kreisbogens um maximal 40 Prozent des Bogenradius abweichen.

5. Greifvorrichtung gemäß Anspruch 1, **dadurch gekennzeichnet, dass** die Oberflächen der einzelnen Außenkerbe (67) und der einzelnen Übergangsstelle (94) feinbearbeitet sind.

6. Greifvorrichtung gemäß Anspruch 1, **dadurch gekennzeichnet, dass** die Oberflächen der einzelnen Außenkerbe (67) und der einzelnen Übergangsstelle (94) mittels einer Oberflächenbearbeitung nachverdichtet sind.

7. Greifvorrichtung gemäß Anspruch 1, **dadurch gekennzeichnet, dass** die T-Nutsteine (61, 62) des Doppelschiebekeilglieds (51) in mindestens einer Hubendlage aus den T-Nuten (106) der Schlitten (100, 101) um mehr als 25 Prozent ihrer Höhe herausfahren.

8. Greifvorrichtung gemäß Anspruch 1, **dadurch gekennzeichnet, dass** die T-Nutsteine (61, 62) in der Hubendlage aus den T-Nuten (106) herausfahren, in der die Schlitten (100, 101) zueinander den geringsten Abstand haben.

## Claims

1. Gripping device with sliders (100, 101) carrying moveable gripping elements (1, 2), wherein the sliders (100, 101) are consecutively guided in a drivable manner via an actuator (120) in the gripping direction (9) of the gripping elements (1, 2) in a guide groove (20) arranged in a base body (10) parallel to the gripping direction (9) that is open toward the gripping elements (1, 2,) at least in sections - between an open and closed position - and are supportively mounted perpendicular to the gripping direction (9) on all sides.
- wherein, between the sliders (100, 101), a double slide wedge member (51) coupling these is arranged, which is moveably hinged on a moveable part of the actuator (120) perpendicular to the gripping direction (9),
- wherein the sliders (100, 101) each comprise, in the front surfaces (103) facing one another, a T-shaped groove (106), into which a T-shaped sliding block (61, 62) protruding from the double slide wedge member (51) respectively engages,
- wherein the T-shaped sliding blocks (61, 62) are each formed or arranged on a central base body (55) of the double slide wedge member (51) via a sliding block holding bar (91, 92),
- wherein the guide longitudinal directions (119) of the T-shaped grooves (106) form an angle of 45 to 122 degrees and
- wherein all outer notches (67) of the T-shaped sliding blocks and the transition points (94) between the T-shaped sliding blocks (61, 62) and the base body (55) are rounded - for the reduction of the notch stress of the double slide wedge member (51),
- wherein the outer notches (67) and the transition points (94) of the double slide wedge member (51) each have a curved circular-arc contour, **characterized in that** their radius (68) has a value that, on the one hand, lies between half of the bar width (93) and one seventh of the bar width of the sliding block holding bar (91, 92) and, on the other hand, lies between one third and one seventh of the depth of the block depth (66) of the T-shaped sliding block (61, 62).

2. Gripping device according to Claim 1, **characterized in that** the outer notches (67) and the transition points (94) of the double slide wedge member (51) each have a curved contour, which are composed of different curved arcs or comparable curves.

3. Gripping device according to Claim 2, **characterized in that** the different curved arcs or comparable curves of the individual outer notch (67) and of the individual transition point (94) each pass tangentially into one another.

4. Gripping device according to Claim 3, **characterized in that** the different curved arcs or comparable curves of the individual outer notch (67) and of the individual transition point (94) as a total curvature deviate from the curvature of a circular arc by a maximum of 40 percent of the arc radius.

5. Gripping device according to Claim 1, **characterized in that** the surfaces of the individual outer notch (67) and the individual transition point (94) are finely machined.

6. Gripping device according to Claim 1, **characterized in that** the surfaces of the individual outer notch (67) and the individual transition point (94) are refinished by means of surface processing.

7. Gripping device according to Claim 1, **characterized in that** the T-shaped sliding blocks (61, 62) of the double slide wedge member (51) in at least one stroke end position extend out the T-shaped grooves (106) of the sliders (100, 101) by more than 25 percent of their height.

8. Gripping device according to Claim 1, **characterized in that** the T-shaped sliding blocks (61, 62) in the stroke end position extend out of the T-shaped grooves (106), in which the sliders (100, 101) have the smallest distance away from each other as possible.

## Revendications

1. Système de préhension avec des coulisseaux (100, 101) portant des éléments de préhension mobiles (1, 2), sachant que les coulisseaux (100, 101) sont guidés dans la direction de préhension (9) des éléments de préhension (1, 2) pouvant être entraînés l'un derrière l'autre dans une rainure de guidage (20) ouverte au moins en partie, disposée dans un corps de base (10), vers les éléments de préhension (1, 2), parallèlement à la direction de préhension (9) - entre une position d'ouverture et une position de fermeture -, par le biais d'un actionneur (120) et sont logés transversalement à la direction de préhension (9) en appui de tous les côtés
- sachant qu'entre les coulisseaux (100, 101) est disposé un élément de clavette coulissante double (51) accouplant ceux-ci, qui est articulé sur une partie mobile de l'actionneur (120) pouvant être déplacé perpendiculairement à la direction de préhension (9),
- sachant que les coulisseaux (100, 101) comportent respectivement dans les surfaces frontales (103) tournées l'une vers l'autre une rainure en T (106) dans laquelle vient respectivement en prise un patin rainuré en T (61, 62) faisant saillie de l'élément de clavette coulissante double (51),
- sachant que les patins rainurés (61, 62) sont respectivement conformés ou disposés par le biais d'une nervure de maintien de patin rainuré (91, 92) ou disposées sur un corps de base (55) central de l'élément de clavette coulissante double (51),
- sachant que les directions longitudinales de guidage (119) des rainures en T (106) forment un angle de 45 à 122 degrés et
- sachant que toutes les encoches extérieures (67) des patins rainurés en T et les emplacements de transition (94) entre les patins rainurés (61, 62) et le corps de base (55) sont arrondies pour réduire les contraintes d'encoche de l'élément de clavette coulissante double (51),
- sachant que les encoches extérieures (67) et les emplacements de transition (94) de l'élément de clavette coulissante double (51) possèdent respectivement un contour d'arc de cercle courbe, **caractérisé en ce que** le rayon (68) de celui-ci a une valeur qui se situe d'une part, entre la demie largeur de nervure (93) et un septième de la largeur de nervure de la nervure de maintien de patin rainuré (91, 92) et d'autre part, entre un tiers et un septième de la profondeur de coulisse (66) du patin rainuré en T (61, 62).

2. Système de préhension selon la revendication 1, **caractérisé en ce que** les encoches extérieures (67) et les emplacements de transition (94) de l'élément de clavette coulissante double (51) ont respectivement des contours courbes, qui sont composés des différents arcs courbes ou courbes comparables.

3. Système de préhension selon la revendication 2, **caractérisé en ce que** les différents arcs courbes ou courbes comparables de chaque encoche extérieure (67) et de chaque emplacement de transition (94) passent respectivement tangentiellement l'un dans l'autre.

4. Système de préhension selon la revendication 3, **caractérisé en ce que** les différents arcs courbes ou courbes comparables de chaque encoche extérieure (67) et de chaque emplacement de transition (94) s'écartent de la courbure d'un arc de cercle d'un maximum de 40 pour cent du rayon d'arc en tant que courbure totale.

5. Dispositif de préhension selon la revendication 1, **caractérisé en ce que** les surfaces de chaque encoche extérieure (67) et de chaque emplacement de transition (94) sont usinées avec précision.

6. Dispositif de préhension selon la revendication 1, **caractérisé en ce que** les surfaces de chaque encoche extérieure (67) et de chaque emplacement de transition (94) sont redensifiées au moyen d'un traitement de surface.

7. Dispositif de préhension selon la revendication 1, **caractérisé en ce que** les patins rainurés en T (61, 62) de l'élément de clavette coulissante double (51) dans au moins une position de fin de course sortent des rainures en T (106) des coulisseaux (100, 101) de plus de 25 pour cent de leur hauteur.

8. Dispositif de préhension selon la revendication 1, **caractérisé en ce que** les patins rainurés en T (61, 62) dans la position de fin de course sortent des rainures en T (106) dans lesquelles les coulisseaux (100, 101) ont le plus faible écart l'un par rapport à l'autre.
